Europäisches Patentamt

(19) European Patent Office

Office européen des brevets

(11) Numéro de publication: **0 223 872**
**B1**

(12) **FASCICULE DE BREVET EUROPEEN**

(45) Date de publication du fascicule du brevet:
**10.05.89**

(21) Numéro de dépôt: **85114889.0**

(22) Date de dépôt: **23.11.85**

(51) Int. Cl.⁴: **A23C 1/04**, A23G 1/00

(54) **Procédé de fabrication d'une poudre de lait.**

(43) Date de publication de la demande:
**03.06.87 Bulletin 87/23**

(45) Mention de la délivrance du brevet:
**10.05.89 Bulletin 89/19**

(84) Etats contractants désignés:
**AT BE CH DE FR GB IT LI NL SE**

(56) Documents cités:
**DE-B- 1 048 467**
**DE-B- 1 149 231**
**FR-A- 2 077 611**
**GB-A- 1 055 424**
**US-A- 2 994 612**
**US-A- 3 027 257**
**US-A- 3 078 167**

**Le dossier contient des informations techniques présentées postérieurement au dépôt de la demande et ne figurant pas dans le présent fascicule.**

(73) Titulaire: **SOCIETE DES PRODUITS NESTLE S.A., Case postale 353, CH-1800 Vevey(CH)**

(72) Inventeur: **Bohren, Hans-Ueli, Les Aveneyres, CH-1806 St-Légier(CH)**
Inventeur: **Kuypers, Theo Walter, Huebeliweg 291, CH-3078 Richigen(CH)**
Inventeur: **Meister, Niklaus, Möschbergweg 20, CH-3506 Grosshoechstetten(CH)**

EP 0 223 872 B1

ACTORUM AG

**Description**

La présente invention concerne un procédé de fabrication d'une poudre de lait.

On connaît différents procédés de fabrication des poudres de lait qui, pour simplifier, peuvent être répartis en deux groupes selon les caractéristiques que l'on désire conférer aux poudres.

Dans un premier groupe, on cherche avant tout le maintien des qualités nutritionnelles et organoleptiques du lait de départ, une conservation prolongée et, le cas échéant, une reconstitution et une dissolution instantanées dans l'eau. Ceci présuppose un traitement ménageant, un faible taux de matière grasse libre, la présence de lactose généralement sous forme amorphe et une structure aérée. Les procédés de séchage par pulvérisation remplissent en général ces conditions mis à part l'instantanéité, qui peut être procurée, notamment par un traitement consécutif d'agglomération. Les poudres obtenues peuvent être utilisées directement.

Le brevet des Etats-Unis No 3 078 167 est représentatif de ce type de procédé. Celui-ci se rapporte à la fabrication de lait gras en poudre par traitement thermique relativement sévère et concentration du lait entier ou réengraissé, refroidissement, cristallisation du lactose sous forme de cristaux assez grands, préchauffage du concentrat et séchage par pulvérisation. Les conditions de cristallisation du lactose et de préchauffage du concentrat sont telles que le lactose cristallisé est redissout en grande partie lors du préchauffage, ce qui provoque un effet d'homogénéisation au niveau de la buse de pulvérisation, réduisant le pourcentage de matières grasses à l'état libre.

Dans un second groupe, on désire plutôt une structure compacte et un taux élevé de matière grasse libre ainsi que, le cas échéant, une note aromatique provenant de la réaction de Maillard.

Ces propriétés n'ont pu être obtenues jusqu'à présent que par les procédés de séchage sur cylindres illustrés, par exemple, par le brevet français No 2 077 611 ou le brevet britannique No 1 280 051. Les poudres fabriquées de cette manière sont des produits intermédiaires entrant dans la confection de sauces, de desserts, de produits de biscuiterie, de confiserie ou de chocolaterie.

Le séchage sur cylindres présente certains inconvénients par rapport au séchage par pulvérisation: il est plus onéreux et plus difficile à mettre en œuvre pour obtenir des poudres de caractéristiques constantes. De plus, le lactose se trouve sous forme amorphe. Or il est souhaitable pour certaines applications, par exemple pour la fabrication de crème glacée et plus particulièrement de chocolat au lait, que la poudre de lait mise en œuvre ait un pourcentage élevé de matières grasses libres et que le lactose soit sous forme de fins cristaux.

Pour éviter les inconvénients inhérents à l'une ou l'autre technique, par exemple selon le brevet suisse No 644 251, on doit recourir au traitement ultérieur sur cylindres en présence de matière grasse d'une poudre de lait ayant été préalablement séchée par pulvérisation.

La présente invention se propose de remédier à ces inconvénients et permet de préparer une poudre de lait ayant certaines caractéristiques des poudres séchées sur cylindres, notamment un taux élevé de matière grasse libre, mais le lactose sous forme finement cristallisée par un procédé ne présentant pas les défauts associés à cette technique.

L'invention concerne donc un procédé de fabrication d'une pourdre de lait contenant, en poids des matières sèches, 20 à 30% de matières grasses dont 20 à 90% sont à l'état libre et dans laquelle le lactose est essentiellement sous forme cristallisée, à partir de matières premières d'origine essentiellement lactique et, le cas échéant, d'un sucre réducteur.

Le procédé selon l'invention est caractérisé par le fait que l'on pasteurise du lait entier ou écrémé à 60–150°C pendant quelques s à 30 min.,

que l'on concentre le lait traité thermiquement jusqu'à 30 à 60% en poids de matières sèches et que l'on refroidit le concentrat à une température inférieure à 40°C, que l'on ensemence le concentrat refroidi avec des cristaux de lactose de dimensions inférieures ou égales à 2 microns, que l'on provoque la cristallisation du lactose sous forme de fins cristaux sous agitation lente et continuelle pendant 30 minutes à 30 heures, que l'on refroidit la suspension obtenue à 0–20°C, et que l'on pulvérise le concentrat dans une tour de séchage à une température inférieure ou égale à 20°C.

Par "matières grasses à l'état libre" selon l'invention, on entend que celles-ci ne sont pas enrobées par des matières protectrices, par exemple des émulsifiants ou des protéines. Dans l'exposé, le pourcentage de matière grasse libre est déterminé à partir de la mesure gravimétrique de la quantité de matière grasse extractible par un solvant, par exemple l'éther de pétrole après qu'on ait éliminé le solvant, rapportée à la quantité de matière grasse totale.

Les matières premières d'origine essentiellement lactique qui peuvent être mises en œuvre sont le lait entier ou écrémé (frais ou reconstitué à partir de poudres), la crème, la matière grasse lactique anhydre ou encore les fractions de matière grasse lactique anhydre.

Dans un premier mode de réalisation, qui est préféré, on traite thermiquement du lait frais écrémé en présence d'un sucre réducteur, par exemple le glucose et, de préférence d'un sel de stabilisation favorisant la réaction de Maillard.

Pour ce faire, on chauffe le mélange à 60–150°C pendant quelques s à 30 min. et de préférence à environ 120°C pendant environ 2 min. Suivant la température et la durée du traitement thermique on réalisera une simple pasteurisation ou on favorisera la réaction de Maillard produisant une saveur caramélisée plus ou moins accentuée. La quantité de sucre réducteur ajoutée, de préférence sous forme d'une solution aqueuse contenant, en poids, 50 à 80% de glucose, correspond, en poids, à 10–20% des matières solides du lait. Comme sel de stabilisation, on utilise de préférence le dihydrate d'hydrogénophosphate disodique, de préférence à raison de 0,3 à 0,5% en poids des matières sèches.

Selon une variante de ce premier mode de réalisation où l'on part du lait frais écrémé, on n'ajoute pas de sucre réducteur ni de sel de stabilisation au lait avant le traitement thermique. Celui-ci se réduit alors à une simple pasteurisation.

Après le traitement thermique, on concentre la solution, par exemple par évaporation au moyen d'un évaporateur à film tombant jusqu'à, en poids, 30–60% et de préférence 50% de matières sèches, puis on refroidit le concentrat à une température inférieure à 40°C, de préférence à 5–35°C.

L'étape suivante consiste à ensemencer le concentrat refroidi avec des cristaux de lactose et à promouvoir la cristallisation du lactose sous forme de fins cristaux. Le lactose d'ensemencement doit être sous forme de fins cristaux dont les dimensions sont inférieures ou égales à 2μm. La quantité de lactose ajoutée doit être suffisante pour amorcer la cristallisation, par exemple environ 0,05% en poids des matières sèches. On peut effectuer la cristallisation dans des cuves à double manteau de préférence à température inférieure à 40°C, pendant 30 min. à 30 h., et de préférence pendant environ 5 h., sous agitation lente et continuelle.

On refroidit ensuite la dispersion obtenue à 0–20°C, de préférence à environ 5°C. Selon ce mode de réalisation, on ajoute à la dispersion refroidie la matière grasse lactique, de préférence sous forme de crème à 10–50%, et de préférence à environ 36% en poids, de matières grasses, elle-même avantageusement refroidie à 0–20°C et de préférence à environ 5°C. La crème aura été avantageusement préalablement stérilisée ou, de préférence, pasteurisée à 63–140°C pendant quelques s à 30 min., puis homogénéisée à 5–80°C, de préférence à environ 50°C, sous une pression de 20 à 500 bar, de préférence à environ 100 bar, en une étape ou en deux étapes, avantageusement à environ 100 bar dans la première et à environ 20 bar dans la deuxième étape. Le mélange contient 40–50% en poids de matières sèches.

On pulvérise ensuite le mélange sous une pression de 60–100 bar au niveau de la buse et à une température inférieure ou égale à 20°C dans une tour de séchage où règne un courant d'air très chaud sous pression, de manière que la température de l'air de sortie soit supérieure ou égale à 80°C.

On peut, dans un mode de réalisation particulier du séchage par pulvérisation, protéger le concentrat, en particulier les matières grasses qu'il contient, contre l'oxydation qui pourrait intervenir lors du séchage. Pour ce faire, on peut injecter un gaz inerte, de préférence l'azote dans le concentrat avant de le pulvériser.

En variante, on peut ajouter au concentrat un antioxydant liposoluble, de préférence naturel, par exemple un mélange de tocophénols à raison de 100 à 200 ppm (parties par million) en poids, avant la pulvérisation.

Avantageusement, toutes les mesures prises, de cristallisation du lactose sous forme de fins cristaux, d'adjonction de crème fortement homogénéisée, de refroidissement du concentrat et de pulvérisation de celui-ci à froid, de préférence à une température de 5 à 20°C sous forte pression dans un courant d'air très chaud, concourrent dans ce mode de réalisation préféré à l'obtention d'un maximum de matière grasse à l'état libre ainsi que de lactose à l'état cristallisé et au maintien de ceux-ci dans ces états.

Après séchage, la poudre a un pourcentage d'humidité de 1 à 5% et de préférence inférieur à 3% en poids. Le lactose est sous forme de cristaux de dimensions 10 à 70μm.

Selon un second mode de réalisation, on traite le lait frais entier au lieu de partir de lait écrémé et d'ajouter la matière grasse lactique juste avant la pulvérisation. Dans ce mode de réalisation, il est important que la solution soit concentrée à au moins 50% de matières sèches lors de l'évaporation, de manière à promouvoir convenablement la cristallisation du lactose. Les autres étapes du procédé sont conduites de manière semblable.

On peut également envisager de partir de lait partiellement écrémé et d'y ajouter à n'importe quelle étape du procédé, mais de préférence juste avant la pulvérisation, la matière grasse lactique, par exemple sous forme de matière grasse lactique anhydre ou de fraction de matière grasse lactique anhydre, de manière à ce que la poudre corresponde à une poudre de lait entier.

Quelle que soit la variante mise en œuvre, on peut bien entendu mélanger à la poudre avant ou après séchage des agents d'aromatisation choisis en fonction des utilisations ultérieures de celle-ci. De préférence, on met la poudre en sacs dans une atmosphère inerte, par exemple d'azote, on ferme les sacs et on les entrepose, de préférence à une température inférieure à 10°C.

La poudre préparée selon l'invention sert de produit intermédiaire dans la fabrication de différents produits alimentaires, par exemple des sauces, des desserts, des crèmes glacées ou des produits de confiserie-chocolaterie.

Les exemples ci-après illustrent l'invention. Dans ceux-ci, les pourcentages et parties sont pondéraux sauf indication contraire.

Exemple 1

A une quantité de lait écrémé correspondant à 62,3 parties de matières solides non grasses on ajoute 10,45 parties de glucose sous forme de sirop à 50% de matières sèches à la température de 40°C sous agitation continue. On ajoute ensuite au mélange 0,3 partie de dihydrate d'hydrogénophosphate disodique en solution aqueuse à 10% de matières sèches. L'ensemble est alors chauffé à 80°C au moyen d'un échangeur tubulaire puis porté à 120°C par injection directe de vapeur à la pression de 3 bar, maintenu à cette température pendant 2 min., puis concentré dans un évaporateur à film tombant jusqu'à 45% de matières sèches. On refroidit ensuite le concentrat à 35°C au moyen d'un échangeur tubulaire, puis on l'ensemence avec 0,05 partie de cristaux de lactose de dimensions inférieures ou égales à 2μm et on le maintient pendant 5 h. à cette température sous agitation continue. On refroidit ensuite le concentrat ensemencé à 5°C.

A la dispersion précédente, on ajoute 23,9 parties de solides gras du lait sous forme de crème à 36% de matières grasses, ayant été préalablement pasteurisée à 90°C pendant 15 s, puis homogénéisée dans un homogénéisateur à deux étages aux pressions respectives de 100 et 20 bar et à la température de 50°C, puis refroidie à 5°C.

On pulvérise ensuite le mélange ayant 45% de matières sèches à la pression de 75 bar au moyen d'une pompe à haute pression dans une tour de séchage dans un courant d'air de pression 0,16 bar (1600 mm $H_2O$) et de température 350°C. A la sortie de la tour, l'air a une température de 85°C et une humidité relative de 15%.

La poudre recueillie au bas de la tour a une teneur en eau de 2,5% et un poids spécifique supérieur à 500 g/l. Elle contient 24,8% de matières grasses dont 79% à l'état libre. (Le pourcentage de matières grasses libres est déterminé comme indiqué précédemment.) Le lactose est sous forme de cristaux de dimensions 10 à 70 μm.

Exemple 2

On procède comme à l'exemple 1 sauf qu'on homogénéise la crème à 10°C avant la refroidir à 5°C et de la mélanger à la dispersion.

La poudre obtenue a une teneur en eau de 0,5% et un poids spécifique de 515 g/l. Elle contient 24,8% de matières grasses dont 69,5% à l'état libre (déterminé comme indiqué précédemment). Le lactose est sous forme cristallisée.

Exemple 3

On procède comme à l'exemple 1 sauf qu'avant la pluvérisation, l'on injecte dans le concentrat 4 l/min. d'azote à environ 3 bar, puis on refoule le concentrat gazéifié dans la buse de pulvérisation au moyen d'une pompe.

Exemple 4

On procède comme à l'exemple 1 sauf qu'on ajoute au concentrat 100 ppm d'un mélange de tocophénols avant la pulvérisation.

Exemple 5

On procède comme à l'exemple 1 à partir d'une quantité de lait entier correspondant à 64,3 parties de matières solides non grasses pour 21,6 de matières grasses à laquelle on ajoute 10,8 parties de sirop de glucose à 50% et 0,3 partie de dihydrate d'hydrogénophosphate disodique à 10%.

Les étapes de préchauffage, chauffage, refroidissement, concentration, cristallisation du lactose et séchage sont semblables à celles de l'exemple 1. Seul change le degré de concentration dans l'évaporateur à film tombant qui est de 50%. L'étape d'addition de crème est supprimée.

La poudre obtenue a une teneur en eau de 2,7% et un poids spécifique de 500 g/l. Elle contient 24,1% de matières grasses dont 25% à l'état libre (déterminé comme indiqué précédemment). Le lactose est sous forme cristallisée.

Exemple 6

On procède comme à l'exemple 3 sauf qu'on homogénéise le concentrat contenant le lactose cristallisé dans un homogénéisateur à deux étages, respectivement à 50 et 10 bar à 10°C.

La poudre obtenue a une teneur en eau de 2,6% et un poids spécifique de 460 g/l. Elle contient 24,1% de matières grasses dont 29% à l'état libre (déterminé comme indiqué précédemment). Le lactose est sous forme cristallisée.

Exemple 7

On procède comme à l'exemple 1 sauf que l'on pasteurise 72,7 parties de lait écrémé, à 120°C pendant 10 s sans ajouter de glucose ni de dihydrate d'hydrogénophosphate disodique.

La poudre contient 24,8% de matières grasses dont 79% à l'état libre (déterminé comme indiqué précédemment) et du lactose sous forme cristallisée.

Elle a un goût plus neutre que les poudres des exemples précédents qui sont faiblement caramélisées.

## Exemple 8

### Sauce à la crème

On prépare une sauce à la crème en poudre par mélange à sec des différants ingrédients dans les proportions suivantes:

| Ingrédients | % des matières sèches |
|---|---|
| Poudre de lait préparée selon l'exemple 7 | 34 |
| Lait écrémé | 15 |
| Matière grasse animale et végétale | 8 |
| Farine de blé et liants | 21 |
| Hydrolysats végétaux et extraits de levure | 10,5 |
| Chlorure de sodium | 3 |
| Glutamate de sodium | 2 |
| Aromatisants, épices | 6,5 |

On délaye 183,3 g de ce mélange dans 1 l d'eau tiède et on cuit le tout à feu vif pendant 3 min. sous forte agitation. La sauce se délaye très rapidement dans formation de grumeaux.

## Exemple 9

### Pudding au caramel

On mélange à sec les ingrédients ci-après dans les proportions indiquées:

| Ingrédients | % des matières sèches |
|---|---|
| Poudre de lait préparée selon l'exemple 1 | 21 |
| Sucre glace | 67,6 |
| Amidon de maïs (dont 50% prégélatinisé) | 9,7 |
| Agents géliflants (farine de graines de caroube, carragénate) | 1,3 |
| Colorant et arôme caramel | 0,22 |
| Chlorure de sodium | 0,18 |

On délaye 350 g du mélange dans 1 l d'eau froide, puis on fait cuire le tout pendant 2 min. On verse ensuite le liquide chaud dans des moules, puis on laisse refroidir le pouding pendant 4 h.

## Exemple 10

### Crème glacée

On prépare un mélange pour crème glacée à la vanille à partir des ingrédients ci-après dans les proportions indiquées:

| Ingrédients | % |
|---|---|
| Poudre de lait préparée selon l'exemple 7 | 17 |
| Beurre | 5 |
| Sucre | 14 |
| Sirop de glucose | 3,5 |
| Stabilisant, émulsifiant | 0,5 |
| Colorant | 0,1 |
| Arôme de vanille | 0,2 |
| Eau | 59,7 |

On réalise le mélange des ingrédients précédents à l'exception de l'arôme et du colorant dans une cuve sous agitation, puis on le pasteurise, on l'homogénéise, on le dégaze, on le réfrigère à l'eau froide, puis à la saumure jusqu'à 0°C et on ajoute parfum et arôme. On le congèle et on le foisonne ensuite dans un freezer.

Exemple 11

Chocolat au lait

On mélange 25 parties de poudre préparée selon l'exemple 1 dont les particules ont une grandeur moyenne de 20 μm dans une conche avec 43 parties de saccharose finement moulu (grandeur moyenne des particules 15 μm), 15,5 parties de beurre de cacao, 12 parties de liqueur de cacao, 0,2 partie de lécithine at 0,02 partie de vanilline. On conche le mélange, on le tempère, on le verse dans des moules et on démoule le chocolat de manière conventionnelle.

Par rapport aux chocolats fabriqués à partir de poudre de lait séchée sur cylindres, le chocolat présent a une légère note caramélisée, une texture moins collante et un goût plus crémeux.

## Revendications

1. Procédé de fabrication d'une poudre de lait contenant, en poids des matières sèches, 20 à 30% de matières grasses dont 20 à 90% sont à l'état libre et dans laquelle le lactose est essentiellement sous forme cristallisée, à partir de matières premières d'origine essentiellement lactique et, le cas échéant, d'un sucre réducteur, caractérisé par le fait que l'on pasteurise du lait entier ou écrémé à 60–150°C pendant quelques s à 30 min.,

que l'on concentre le lait traité thermiquement jusqu'à 30 à 60% en poids de matières sèches et que l'on refroidit le concentrat à une température inférieure à 40°C, que l'on ensemence le concentrat refroidi avec des cristaux de lactose de dimensions inférieures ou égales à 2 microns, que l'on provoque la cristallisation du lactose sous forme de fins cristaux sous agitation lente et continuelle pendant 30 minutes à 30 heures, que l'on refroidit la suspension obtenue à 0–20°C, et que l'on pluvérise le concentrat dans une tour de séchage à une température inférieure ou égale à 20°C.

2. Procédé selon la revendication 1, caractérisé par le fait que le traitement thermique a lieu en présence d'une solution de glucose et d'un sel de stabilisation.

3. Procédé selon la revendication 1 ou 2, caractérisé par le fait que l'on met en œuvre du lait écrémé et que l'on ajoute à la suspension de la matière grasse lactique préalablement stérilisée ou pasteurisée et homogénéisée, puis refroidie à 0–20°C.

4. Poudre de lait comme obtenue par la mise en œuvre du procédé selon l'une des revendications 1 à 3.

5. Utilisation d'une poudre selon la revendication 4 dans la fabrication de crèmes glacées ou de produits de confiserie-chocolaterie.

## Patentansprüche

1. Verfahren zur Herstellung von Milchpulver, das, bezogen auf das Gewicht der Trockenmaterialien, 20 bis 30% Fette, von denen 20 bis 90% in freier Form vorliegen, enthält und worin die Lactose im wesentlichen in kristallisierter Form vorliegt, ausgehend von im wesentlichen von Milch stammenden Rohstoffen und gegebenenfalls von einem reduzierenden Zucker, dadurch gekennzeichnet, daß man Vollmilch oder Magermilch bei 60 bis 150°C während einiger Sekunden bis zu 30 Minuten pasteurisiert, daß man die thermisch behandelte Milch bis auf 30 bis 60 Gewichts-% Trockenmaterial konzentriert und daß man das Konzentrat auf eine Temperatur unter 40°C abkühlt, daß man das abgekühlte Konzentrat mit Lactosekristallen mit Abmessungen von kleiner als oder gleich 2 μm beimpft, daß man die Kirstallisation der Lactose in Form feiner Kristalle unter langsamem und dauerndem Rühren während 30 Minuten bis 30

6

Stunden bewirkt, daß man die erhaltene Suspension auf 0 bis 20°C abkühlt und daß man das Konzentrat in einem Trocknungsturm bei einer Temperatur unterhalb oder gleich 20°C versprüht.

2. Verfahren nach Anspruch 1, dadurch gekennzeichnet, daß die thermische Behandlung in Gegenwart einer Lösung von Glucose und eines Stabilisierungssalzes vorgenommen wird.

3. Verfahren nach Anspruch 1 oder 2, dadurch gekennzeichnet, daß man Magermilch einsetzt und daß man zur Suspension Milchfett zusetzt, das zuvor sterilisiert oder pasteurisiert und homogenisiert und anschließend auf 0 bis 20°C abgekühlt worden ist.

4. Milchpulver, wie es durch Ausführung des Verfahrens nach einem der Ansprüche 1 bis 3 erhalten worden ist.

5. Verwendung eines Pulvers nach Anspruch 4 in der Bereitung von Eiscremen oder von Confiserie- und Schokoladeprodukten.

**Claims**

1. A process for the production of a milk powder containing, by weight of dry matter, from 20 to 30% fats of which from 20 to 90% are in the free state and in which the lactose is essentially in crystallized form from starting materials of essentially lactic origin and, optionally, a reducing sugar, characterized in that whole or skimmed milk is pasteurized for a few seconds to 30 minutes at 60 to 150°C, the heat-treated milk is concentrated to a dry matter content of 30 to 60% by weight and the concentrate is cooled to a temperature below 40°C, the cooled concentrate is seeded with lactose crystals smaller than or equal to 2 microns in size, the lactose is crystallized in the form of fine crystals with slow, continuous stirring for 30 minutes to 30 hours and the suspension obtained is cooled to 0–20°C and the concentrate is sprayed into a spray drying tower at a temperature below or equal to 20°C.

2. A process as claimed in claim 1, characterized in that heat treatment takes place in the presence of a solution of glucose and a stabilizing salt.

3. A process as claimed in claim 1 or 2, characterized in that skimmed milk is used and milk fats previously sterilized or pasteurized and homogenized and then cooled to 0–20°C are added to the suspension.

4. A milk powder obtained by the process claimed in any of claims 1 to 3.

5. The use of the powder claimed in claim 4 in the production of ice creams or confectionery and chocolate goods.